# EUROPEAN PATENT SPECIFICATION

(11) **EP 4 321 653 B1**
(45) Date of publication and mention of the grant of the patent: **15.04.2026**
(21) Application number: 22784618.5
(22) Date of filing: 30.03.2022
(51) Int. Cl.: C25D 5/14, C25D 5/50, C25D 7/06, C23C 28/02, C23C 30/00, C25D 3/12, C25D 5/36

(54) **SURFACE-TREATED STEEL SHEET**
OBERFLÄCHENBEHANDELTES STAHLBLECH
TÔLE D'ACIER TRAITÉE EN SURFACE

(30) Priority: 08.04.2021 JP 2021065675
(43) Date of publication of application: 14.02.2024
(73) Proprietor: NIPPON STEEL CORPORATION, Chiyoda-ku Tokyo 100-8071 (JP)
(72) Inventor: KAWAMOTO, Kosuke, Tokyo 100-8071 (JP); GOTO, Yasuto, Tokyo 100-8071 (JP); MATSUMOTO, Katsumasa, Tokyo 100-8071 (JP); NAGATA, Tatsuo, Tokyo 100-8071 (JP)
(74) Representative: Vossius & Partner Patentanwälte Rechtsanwälte mbB
(86) International application number: PCT/JP2022/016310
(87) International publication number: WO 2022/215634

(56) References cited:
- WO-A1-2012/137823
- WO-A1-2017/006834
- JP-A- 2007 035 282
- JP-A- 2007 051 325
- JP-A- 2007 051 325
- JP-B1- 6 086 176
- US-A1- 2014 017 515

## Description

### [Technical Field]

The present invention relates to a surface-treated steel sheet.

Priority is claimed on Japanese Patent Application No. 2021-065675, filed April 8, 2021, the content of which is incorporated herein by reference.

### [Background Art]

Lithium ion secondary batteries (LIB) are widely used as power sources for electric vehicles. Lithium ion secondary battery cans are classified into a cylindrical type and a rectangular type. Cylindrical type battery cans that are connected to negative electrodes are used. Therefore, Ni-plated steel sheets and SUS are used as materials for cylindrical lithium ion secondary battery cans. When cans are connected to negative electrodes, aluminum cannot be used as a material for cans because it absorbs Li. On the other hand, since rectangular can types are used in a neutral environment, aluminum and SUS are currently used as materials therefor.

However, in order to further improve safety such as heat resistance, there is a demand to replace aluminum in battery cans with other materials. SUS has better heat resistance than aluminum, but has poor dissolution resistance (LIB electrolyte solution resistance) with respect to an LIB electrolyte solution compared to aluminum.

As a candidate for a battery can material to replace aluminum and SUS, a surface-treated steel sheet is conceivable. Examples of advantages of steel battery cans include high heat resistance, reducing the weight of battery cans by making them thinner because of its high strength, improved volume energy density, and low cost.

However, conventional surface-treated steel sheets, for example, Ni-plated steel sheets, have a problem that their LIB electrolyte solution resistance is poorer than that of aluminum and SUS. In order to use a steel sheet as a battery can material for automobiles, it is preferable to increase the LIB electrolyte solution resistance of the steel sheets to a level equivalent to or close to that of aluminum.

As a technology related to steel sheets for battery cans, Patent Document 1 discloses a technology in which, after nickel plating is performed on the inner surface of a battery container of a steel sheet or after a heat treatment is performed in a non-oxidizing atmosphere after nickel plating, nickel-tungsten alloy plating is performed or nickel plating is performed, and subsequently, nickel-tungsten alloy plating is performed, a heat treatment is then performed in a non-oxidizing atmosphere to obtain a plated steel sheet for a battery container, and the sheet is molded into a battery container and applied to a battery.

Patent Document 2 discloses a Ni-containing surface-treated steel sheet for containers molded by press molding, the Ni-containing surface-treated steel sheet for containers including a steel sheet having a first surface that serves as the outside of the container after the press molding, a Ni-containing layer disposed on the first surface of the steel sheet, and a Ni-W alloy plating layer disposed on the Ni-containing layer: the Ni-containing layer having a Fe-Ni diffusion alloy layer, the amount of Ni contained in the Ni-containing layer being 5 g/m² or more and 89 g/m² or less; the thickness of the Ni-W alloy plating layer being 0.02 µm or more and 2 µm or less; and the W concentration (in mass%) in the Ni-W alloy plating layer being 10% or more and 65% or less.

Patent Document 3 discloses a steel sheet for a non-aqueous electrolyte solution secondary battery case including a steel sheet; and a Ni-W-Fe alloy plating layer which is formed on the surface of the steel sheet, contains a Ni-W-Fe alloy, and serves as the inner surface of the non-aqueous electrolyte solution secondary battery case.

### [Citation List]

### [Patent Document]

[Patent Document 1]
   Japanese Unexamined Patent Application, First Publication No. 2007-51325
[Patent Document 2]
   PCT International Publication No. WO2012/137823
[Patent Document 3]
   PCT International Publication No. WO2017/006834

### [Summary of the Invention]

### [Problems to be Solved by the Invention]

However, in Patent Documents 1 and 2, the LIB electrolyte solution resistance is not specifically examined, and a configuration therefor is not disclosed.

In Patent Document 3, minimizing deterioration of battery performance and corrosion of a case due to metal elution is examined. However, the surface-treated steel sheet disclosed in Patent Document 3 is mainly used for small consumer mobile devices. For example, in a battery can that constitutes a large battery such as an automobile battery, better LIB electrolyte solution resistance than that of the surface-treated steel sheet disclosed in Patent Document 3 is required.

In view of the above circumstances, an object of the present invention is to provide a surface-treated steel sheet having better LIB electrolyte solution resistance than conventional SUS sheets, Ni-plated steel sheets and the like.

### [Means for Solving the Problem]

A surface-treated steel sheet according to the invention is defined in claim 1. Preferred embodiments are defined in dependent claims.

### [Effects of the Invention]

According to the present invention, it is possible to provide a surface-treated steel sheet having better LIB electrolyte solution resistance than conventional SUS sheets, Ni-plated steel sheets and the like.

### [Brief Description of Drawings]

FIG. 1 is a cross-sectional schematic view of a surface-treated steel sheet according to one embodiment of the present invention.
FIG. 2 is a schematic view showing average values of W concentration in a high W concentration layer and a low W concentration layer.
FIG. 3 is a flowchart showing a method of producing a surface-treated steel sheet according to another embodiment of the present invention.
FIG. 4 is a diagram illustrating a drawbead test of an example.
FIG. 5A shows surface analysis results of a surface-treated steel sheet of Level 1 after the drawbead test.
FIG. 5B shows the surface analysis results of a surface-treated steel sheet of Level 3 after the drawbead test.

### [Embodiment(s) for implementing the Invention]

The inventors have conducted extensive studies regarding a method of increasing LIB electrolyte solution resistance of surface-treated steel sheets. As a result, it is thought that using an alloy containing Ni-W for a plating layer of the surface-treated steel sheet is effective in improving LIB electrolyte solution resistance electrochemically.

However, the inventors have found that, addition of W to a Ni plating bath to improve electrochemical properties of a Ni plating layer alone cannot sufficiently improve the LIB electrolyte solution resistance of the surface-treated steel sheet. It is presumed that the reason for this is that a Ni-W-based plating is hard and easily cracked. Fine cracks are likely to occur in a hard plating. The inventors thought that these cracks may impair the LIB electrolyte solution resistance of the surface-treated steel sheet.

The inventors conducted further studies based on the above findings. As a result, the inventors found that, when a plating layer containing Ni and W is formed on the surface of a base steel sheet and a high W concentration layer and a low W concentration layer positioned therebelow are provided in the vicinity of the surface of the plating layer, this is very effective to improve the LIB electrolyte solution resistance. It is presumed that this is because the low W concentration layer restricts propagation of cracks from the surface of the surface-treated steel sheet toward the inside thereof.

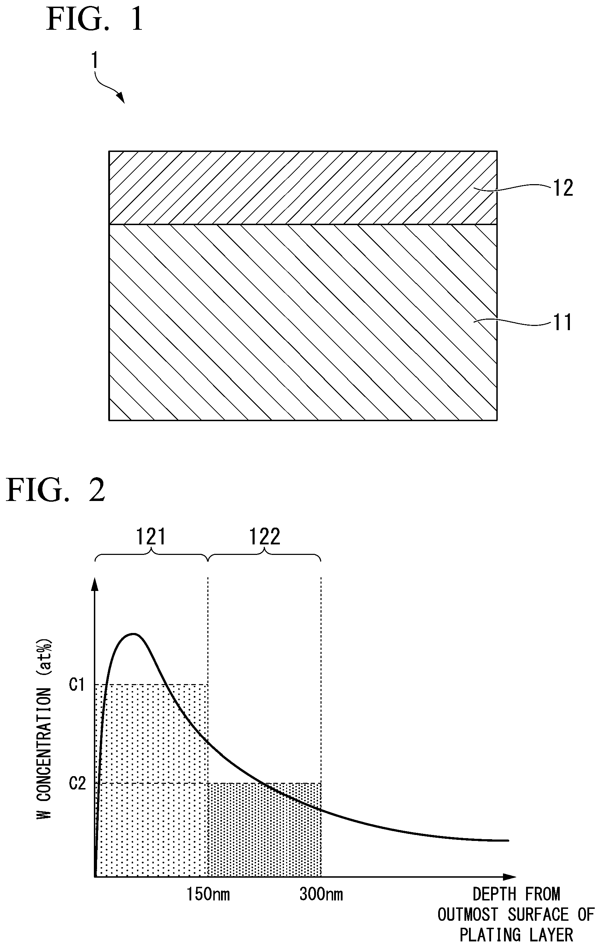

A surface-treated steel sheet 1 according to one embodiment of the present invention obtained based on the above findings includes, as shown in FIG. 1, a base steel sheet 11, and a plating layer 12 containing Ni and W that is provided on the surface of the base steel sheet 11, and in a region (a high W concentration layer 121) from the outmost surface of the plating layer 12 to a depth of 150 nm, the proportion (unit atomic%) of the average W concentration with respect to a total of the average Ni concentration, the average W concentration, and the average Fe concentration is 2.0 to 20.0 atomic%, and in a region (a low W concentration layer 122) of the plating layer from a depth of 150 nm to a depth of 300 nm, a proportion (unit atomic%) of the average W concentration with respect to a total of the average Ni concentration, the average W concentration, and the average Fe concentration 0.7 times or less the proportion in the region from the outmost surface of the plating layer to a depth of 150 nm. Hereinafter, the surface-treated steel sheet 1 according to the present embodiment will be described in detail.

### (Base steel sheet 11)

The surface-treated steel sheet 1 includes the base steel sheet 11. The base steel sheet 11 is a steel sheet that serves as a base of the surface-treated steel sheet 1. The components, the sheet thickness, the metal structure and the like of the base steel sheet 11 are not particularly limited. When the surface-treated steel sheet 1 is used as a material for a battery container, for example, the base steel sheet 11 is made of low-carbon aluminum killed-steel, IF steel (Interstitial Free Steel/ultra-low carbon steel) or the like. A specific example of the chemical composition (unit: mass%) of the base steel sheet 11 is as follows.
(Example 1) low-carbon aluminum killed-steel
   C: 0.057, Si: 0.004, Mn: 0.29, P: 0.014, S: 0.007, Al: 0.050, Cu: 0.034, Ni: 0.021, the remainder being made up of Fe and impurities
(Example 2) IF steel
   C: 0.004, Si: 0.01, Mn: 0.16, P: 0.013, S: 0.006, Al: 0.029, Cu: 0.027, Ni: 0.022, Ti: 0.013, the remainder being made up of Fe and impurities
(Example 3) IF steel
   C: 0.0012, Si: less than 0.01, Mn: 0.16, P: 0.013, S: 0.006, Al: 0.029, Cu: 0.027, Ni: 0.022, Ti: 0.020, the remainder being made up of Fe and impurities

The thickness of the base steel sheet 11 is not particularly limited. When the surface-treated steel sheet 1 is used as, for example, a material for a battery container, the thickness of the base steel sheet 11 may be, for example, 0.15 to 2.0 mm.

### (Plating layer 12)

The surface-treated steel sheet 1 according to the present embodiment has the plating layer 12 containing Ni and W that is provided on the surface of the base steel sheet 11.

The plating layer 12 may be an alloyed plating layer formed by diffusing Fe of the base steel sheet 11 into a plating layer composed of Ni and W. That is, the plating layer 12 may contain Ni, Fe, and W. The alloyed plating layer may be a full diffusion plating layer in which Fe diffuses to its surface or a partial diffusion plating layer in which Fe does not diffuse to its surface. When the plating layer 12 is a partial diffusion plating layer, the Fe concentration is assumed to be 0 atomic% when a "proportion of an average W concentration" to be described below is measured.

The plating layer 12 may contain elements (for example, impurity elements) other than Ni, Fe, and W. In addition, the plating layer 12 may be provided only on one surface of the base steel sheet 11 or may be provided on both surfaces thereof. When the plating layer 12 is provided on both surfaces of the base steel sheet 11, the Ni coating weight to be described below is the Ni coating weight per surface of the surface-treated steel sheet 1.

In addition, regions of the plating layer 12 other than the high W concentration layer 121 and the low W concentration layer 122 to be described below may be formed in the same configuration as in general surface-treated steel sheets (for example, Ni-plated steel sheets for battery cans and alloyed Ni-plated steel sheets). This is because the LIB electrolyte solution resistance of the surface-treated steel sheet 1 according to the present embodiment is exhibited by the high W concentration layer 121 and the low W concentration layer 122.

### (High W concentration layer 121 of plating layer 12)

In a region from the outmost surface of the plating layer 12 to a depth of 150 nm, the proportion (unit atomic%) of an average W concentration with respect to the total of the average Ni concentration, the average W concentration, and the average Fe concentration (including 0 atomic%) is 2.0 to 20.0 atomic%. Hereinafter, the region from the outmost surface of the plating layer 12 to a depth of 150 nm will be referred to as a "high W concentration layer 121." In addition, the proportion (unit atomic%) of the average W concentration with respect to the total of an average Ni concentration, the average W concentration, and the average Fe concentration will be referred to as a "W proportion." As described above, when Fe does not diffuse to the surface of the plating layer 12 and the high W concentration layer 121 and/or the low W concentration layer 122 to be described below does not contain Fe, the Fe concentration is assumed to be 0 atomic% when the W proportion in the high W concentration layer 121 and/or the low W concentration layer 122 is calculated.

The average Ni concentration, the average W concentration, and the average Fe concentration in the high W concentration layer 121 are obtained by continuously measuring atom concentration of Ni, W, and Fe using X-ray Photoelectron Spectroscopy (XPS) from the surface of the plating layer 12 toward the inside thererof. FIG. 2 is a schematic view showing average values of W concentration. A method of determining the W proportion will be described below in detail.

The high W concentration layer 121 is composed of a Ni-W alloy or Ni-Fe-W alloy having excellent LIB electrolyte solution resistance. Therefore, the high W concentration layer 121 has an effect of improving the LIB electrolyte solution resistance of the surface-treated steel sheet 1. However, when the W proportion in the high W concentration layer 121 is less than 2.0 atomic%, the LIB electrolyte solution resistance of the surface-treated steel sheet 1 is insufficient. Therefore, the W proportion in the high W concentration layer 121 is 2.0 atomic% or more. The W proportion in the high W concentration layer 121 may be 5.0 atomic% or more, 6.0 atomic% or more, 7.0 atomic% or more, or 8.0 atomic% or more.

On the other hand, even if the W proportion in the high W concentration layer 121 is more than 20.0 atomic%, the LIB electrolyte solution resistance is insufficient. It is presumed that this is because the high W concentration layer 121 becomes embrittled, fine cracks are likely to occur in the high W concentration layer 121, and the cracks impair the LIB electrolyte solution resistance. Therefore, the W proportion in the high W concentration layer 121 is 20.0 atomic% or less. The W proportion in the high W concentration layer 121 may be 18.0 atomic% or less, 16.0 atomic% or less, or 15.0 atomic% or less.

### (Low W concentration layer 122 of plating layer 12)

In the plating layer 12 of the surface-treated steel sheet 1 according to the present embodiment, in a region of the plating layer 12 from a depth of 150 nm to a depth of 300 nm, a proportion (unit atomic%) of the average W concentration with respect to a total of the average Ni concentration, the average W concentration, and the average Fe concentration (including 0 atomic%) is 0.7 times or less the proportion in the region from the outmost surface of the plating layer to a depth of 150 nm. Hereinafter, the region of the plating layer 12 from a depth of 150 nm to a depth of 300 nm will be referred to as a "low W concentration layer 122." That is, in the plating layer 12 of the surface-treated steel sheet 1 according to the present embodiment, the W proportion in the low W concentration layer 122 is 0.7 times or less the W proportion in the high W concentration layer 121.

According to the experiment results obtained by the inventors, the low W concentration layer 122 further improves the LIB electrolyte solution resistance of the surface-treated steel sheet 1. Although this reason for this is not clear, the inventors presume that the low W concentration layer 122 has a function of preventing fine cracks occurring in the hard high W concentration layer 121 from propagating inside the plating layer 12. It is presumed that, when propagation of cracks is prevented, the LIB electrolyte solution resistance of the surface-treated steel sheet 1 is further improved. Therefore, the W proportion in the low W concentration layer 122 is 0.7 times or less the W proportion in the high W concentration layer 121. The W proportion in the low W concentration layer 122 may be 0.6 times or less, 0.5 times or less, or 0.4 times or less the W proportion in the high W concentration layer 121.

### (Method of measuring W proportion in high W concentration layer 121 and low W concentration layer 122)

The W proportion in the high W concentration layer 121 and the W proportion in the low W concentration layer 122 are measured using XPS as described above.

First, the surface of the surface-treated steel sheet 1 is sputtered using rare gas ions such as argon and xenon. Subsequently, from the surface of the plating layer 12 of the surface-treated steel sheet 1 toward the inside thereof, components of the plating layer 12 are measured. After the measurement is completed, a cycle of performing sputtering again, and then measurement is repeated.

Next, as shown in FIG. 2, in a graph with the horizontal axis that represents the depth and the vertical axis that represents the W concentration, analysis results of the W concentration in the depth direction are plotted. Then, a value obtained by dividing the value obtained by integrating the W concentration graph in the interval of 0 nm to 150 nm corresponding to the high W concentration layer 121 by the width (that is, 150 nm) of the interval of 0 nm to 150 nm is assumed to be an average value C1 of W concentration in a region from the outmost surface of the plating layer to a depth of 150 nm. Similarly, a value obtained by dividing the value obtained by integrating the W concentration graph in the interval of 150 nm to 300 nm corresponding to the low W concentration layer 122 by the width (that is, 150 nm) of the interval of 150 nm to 300 nm is assumed to be an average value C2 of W concentration in a region of the plating layer from a depth of 150 nm to a depth of 300 nm.

When the above calculation performed for the W concentration is applied to the Ni and Fe analysis results, it is possible to obtain an average Ni concentration and an average Fe concentration in terms of unit atomic% in the region from the outmost surface of the plating layer to a depth of 150 nm and in the region of the plating layer from a depth of 150 nm to a depth of 300 nm. Based on these values, the W average concentration in the high W concentration layer 121 and the W average concentration in the low W concentration layer 122 can be calculated.

Here, measurement of components of the plating layer 12 using XPS is performed using an Mg beam source. In the analysis using an Mg beam source, there is no Auger peak overlapping photoelectron peaks of Ni, W, and Fe. A peak is observed in the 2p orbital for Fe, the 2p orbital for Ni, and the 4f orbital for W.

In the surface-treated steel sheet 1 according to the present embodiment, as long as the above conditions for the high W concentration layer 121 and the low W concentration layer 122 are satisfied, other configurations can be appropriately selected. Hereinafter, a more preferable configuration of the surface-treated steel sheet 1 according to the present embodiment will be exemplified.

### (Ni coating weight)

The Ni coating weight contained in the plating layer 12 is not particularly limited, and may be, for example, 2.6 to 35.6 g/m². If the Ni coating weight is 2.6 g/m² or more, the LIB electrolyte solution resistance of the surface-treated steel sheet 1 is further improved. On the other hand, if the Ni coating weight is 35.6 g/m² or less, it is possible to reduce the production cost of the plating layer 12. The Ni coating weight may be 4.5 g/m² or more, 6.2 g/m² or more, or 8.9 g/m² or more. The Ni coating weight may be 26.7 g/m² or less, 17.8 g/m² or less, or 13.4 g/m² or less. Here, the thickness of the plating layer 12 is not particularly limited. Since the high W concentration layer 121 and the low W concentration layer 122 are included in the plating layer 12, the thickness of the plating layer 12 is necessarily a total thickness of 300 nm or more, and within this range, a preferable thickness of the plating layer 12 can be appropriately selected. For example, the thickness of the plating layer 12 may be in a range of 0.3 µm to 3.0 µm. Here, the thickness of the plating layer 12 is generally determined by the Ni coating weight.

The Ni coating weight contained in the plating layer 12 is measured through ICP optical emission spectrometry (ICP-OES). First, a predetermined area of the plating layer 12 is dissolved with an acid. Next, the total amount of Ni contained in the solution is quantitatively analyzed through ICP-OES. When the total amount of Ni quantified through ICP-OES is divided by the above predetermined area, the Ni coating weight per unit area can be obtained.

### (Applications)

Applications of the surface-treated steel sheet 1 according to the present embodiment are not particularly limited. For example, the surface-treated steel sheet 1 according to the present embodiment can be applied to battery cans for large lithium ion batteries. Since the base of the surface-treated steel sheet 1 according to the present embodiment is a steel sheet, it has high strength and heat resistance. Therefore, the surface-treated steel sheet 1 according to the present embodiment can increase the heat resistance and strength of the lithium ion battery and reduce its weight. In addition, according to the surface-treated steel sheet 1 of the present embodiment, it is possible to improve the volume energy density by thinning the battery can. In addition, the surface-treated steel sheet 1 according to the present embodiment has higher LIB electrolyte solution resistance than conventional surface-treated steel sheets. Therefore, the surface-treated steel sheet 1 according to the present embodiment contributes to lengthening the lifespan of the lithium ion battery.

### (Method of producing surface-treated steel sheet 1)

A method of producing the surface-treated steel sheet 1 according to the present embodiment is not particularly limited, and for example, according to the production method to be described below, it is possible to obtain the surface-treated steel sheet 1 according to the present embodiment.

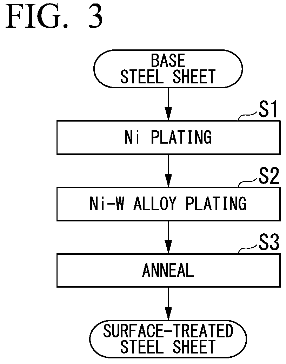

As shown in FIG. 3, the method of producing a surface-treated steel sheet according to another embodiment of the present invention includes:
a step S1 in which a base steel sheet is subjected to Ni plating,
a step S2 in which Ni-W alloy plating is performed on a base steel sheet having a Ni plating layer, and
a step S3 in which a base steel sheet having a Ni plating layer and a Ni-W alloy plating layer disposed thereon is annealed.

Here, the thickness of the Ni plating layer is within a range of 0.3 to 3.5 µm, the thickness of the Ni-W alloy plating layer is within a range of 0.010 to 0.30 µm, the average W concentration of the Ni-W alloy plating layer is 20 to 45 mass%, and additionally, the heating rate in the annealing S3 is 5 to 10°C/sec in a temperature range of 600 to 700°C.

### (Ni plating step S1)

First, a Ni plating is performed on a base steel sheet using an electroplating bath. The type of the base steel sheet is not particularly limited, and for example, the above low-carbon aluminum killed-steel, IF steel and the like can be appropriately used. Electro-Ni plating conditions are not particularly limited. For example, Ni plating conditions for the Ni-plated steel sheet for general batteries can be appropriately used. As necessary, a pretreatment such as degreasing or pickling may be performed on the base steel sheet before Ni plating.

The thickness of the Ni plating layer plated in the Ni plating step S1 is measured using X-ray fluorescence (XRF). First, a calibration curve is created by the following procedure.
(1) Various types of Ni plating with different adhesion amounts are prepared on the surface of the base steel sheet. When various types of Ni plating are prepared, bath composition and current density conditions are the same.
(2) The above plated steel sheet is analyzed using XRF to obtain quantitative analysis results for Ni.
(3) Ni of the above plated steel sheet is quantitatively analyzed using inductively coupled plasma mass spectrometry (ICP-MS), and the adhesion amount is measured.
(4) A calibration curve for XRF is created by comparing the Ni coating weight obtained using ICP-MS with the quantitative analysis value of Ni obtained using XRF.

Next, the Ni plating layer to be measured is analyzed through XRF using the calibration curve obtained in the above procedure, and thus the thickness of the Ni plating layer plated in the Ni plating step S1 can be measured.

### (Ni-W alloy plating step S2)

### (Annealing step S3)

Next, Ni-W alloy plating is performed on the base steel sheet having a Ni plating layer using an electroplating bath. In addition, the base steel sheet having the Ni plating layer and the Ni-W alloy plating layer disposed thereon is annealed. When a plating having such a two-layer structure is annealed, alloy components are diffused to form a high W concentration layer and a low W concentration layer.

Here, it is necessary to set the thickness of the Ni-W alloy plating layer plated in the Ni-W alloy plating step S2 to be within a range of 0.010 to 0.30 µm and also to set the average W concentration of the Ni-W alloy plating layer plated in the Ni-W alloy plating step S2 to be 20 to 45 mass%. More preferably, the thickness of the Ni-W alloy plating layer plated in the Ni-W alloy plating step S2 is 0.20 µm or less. When the base steel sheet having such a Ni-W alloy plating layer is annealed, it is possible to obtain a plating layer in which the W proportion in the high W concentration layer is 2.0 to 20.0 atomic%, and the W proportion in the low W concentration layer is 0.7 times or less the W proportion in the high W concentration layer. When the thickness of the Ni-W alloy plating layer plated in the Ni-W alloy plating step S2 is insufficient or when the concentration of the Ni-W alloy plating layer plated in the Ni-W alloy plating step S2 is insufficient, the W proportion in the high W concentration layer is insufficient. On the other hand, when the thickness of the Ni-W alloy plating layer becomes excessive or when the concentration of the Ni-W alloy plating layer becomes excessive, the W proportion in the high W concentration layer and/or the W proportion in the low W concentration layer becomes excessive.

The thickness and components of the Ni-W alloy plating layer plated in the Ni-W alloy plating step S2 can be arbitrarily controlled according to components of the plating bath and conduction conditions. In other words, as long as the thickness and components of the Ni-W alloy plating layer plated in the Ni-W alloy plating step S2 are within the above ranges, components of the plating bath and conduction conditions in the Ni-W alloy plating plated in the Ni-W alloy plating step S2 are not particularly limited.

The thickness and components of the Ni-W alloy plating layer plated in the Ni-W alloy plating step S2 can be measured using X-ray fluorescence (XRF). First, a calibration curve is created by the following procedure.
(1) Various types of Ni-W alloy plating with different adhesion amounts are prepared on the surface of the Ni-plated steel sheet with a known Ni basis weight. When various types of Ni-W alloy plating are prepared, the bath composition and current density conditions are the same.
(2) The above plated steel sheet is analyzed using XRF to obtain quantitative analysis results for Ni and W.
(3) Ni and W of the above plated steel sheet are quantitatively analyzed using inductively coupled plasma mass spectrometry (ICP-MS), and the adhesion amount (the total adhesion amount of the lower Ni plating layer and the upper Ni-W alloy plating layer) is measured.
(4) A calibration curve for XRF is created by comparing the Ni and W adhesion amount obtained using ICP-MS with the quantitative analysis value of Ni and W obtained using XRF.

Next, the Ni-W alloy plating layer to be measured is analyzed through XRF using the calibration curve obtained in the above procedure, and thus the thickness and components of the Ni-W alloy plating layer plated in the Ni-W alloy plating step S2 can be measured.

In the annealing step S3 after the Ni-W alloy plating step S2, it is necessary to set the heating rate in a temperature range of 600 to 700°C to be 5 to 10°C/sec. Thereby, it is possible to preferably form Ni and W densities in the outermost layer of the plating layer. If the heating rate is shorter than 5°C/sec, diffusion of Ni and W proceeds too much, the W concentration of the high W concentration layer becomes low, and the W concentration of the low W concentration layer becomes high, and thus the W proportion (W proportion in low W concentration layer/high W concentration layer) becomes high. If the heating rate is faster than 10°C/sec, diffusion of Ni and W proceeds insufficiently, and the W concentration of the high W concentration layer increases. Here, the "heating rate in a temperature range of 600 to 700°C" is an "average heating rate" in the temperature range. The value obtained by dividing 100°C (=700°C-600°C) by the time required for the temperature to rise from 600°C to 700°C is the average heating rate.

As long as the heating rate is within the above range, other annealing conditions are not particularly limited, and in consideration of the Ni coating weight, annealing conditions for general Ni-plated steel sheets can be appropriately used. For example, as described above, the plating layer 12 of the surface-treated steel sheet 1 according to the present embodiment may be a partial diffusion alloyed plating layer or a full diffusion alloyed plating layer. Therefore, known annealing conditions for obtaining these alloyed plating layers can be appropriately used.

The Ni coating weight is not particularly limited, and for example, the total Ni coating weight contained in the Ni plating layer and the Ni-W alloy plating layer may be 2.6 to 35.6 g/m². When the total Ni coating weight is 2.6 g/m² or more, the LIB electrolyte solution resistance of the surface-treated steel sheet 1 is further improved. On the other hand, when the total Ni coating weight is 35.6 g/m² or less, it is possible to reduce the production cost of the plating layer 12. The total Ni coating weight may be 4.5 g/m² or more, 6.2 g/m² or more, or 8.9 g/m² or more. The total Ni coating weight may be 26.7 g/m² or less, 17.8 g/m² or less, or 13.4 g/m² or less.

### [Examples]

Various surface-treated steel sheets of Levels 1 to 11, 14 and 15 were prepared under conditions shown below.
- base steel sheet: unannealed Al-k steel with a thickness of 0.40 mm
- plating bath components: as shown in Table 1-1 and Table 1-2
- plating bath temperature: 60°C
- Ni plating conditions and Ni-W alloy plating conditions: the base steel sheet was subjected to plating in the order of Ni plating and Ni-W alloy plating so that the adhesion amount was as shown in Table 2-1. In this case, a current density of 1.0 to 50.0 A/dm² and a conduction time of 0.1 to 50.0 sec were adjusted appropriately for each level so that the target basis weight was achieved. (where, no Ni plating was performed in Level 1, and Ni-W alloy plating was performed in Level 12) The thickness of the Ni plating was as shown in Table 2-1.
- annealing: performed under temperature conditions in which the sample was heated to 800°C and left at the temperature for 20 sec. The heating rate in a temperature range of 600 to 700°C is as shown in Table 2-1.

In addition, as Level 13, SUS304 with a thickness of 0.40 mm (hereinafter referred to as a SUS sheet) was prepared.

The W proportion in the high W concentration layer (that is, in the region from the outmost surface of the plating layer to a depth of 150 nm, the proportion (unit atomic%) of an average W concentration with respect to a total of an average value of Ni concentration, an average value of W concentration, and an average value of Fe concentration) of various surface-treated steel sheets obtained by the above procedure was measured, and shown in the column "W proportion in the high W concentration layer" in Table 2-2. In addition, the W proportion in the low W concentration layer (that is, in the region of the plating layer from a depth of 150 nm to a depth of 300 nm, the proportion (unit atomic%) of the average W concentration with respect to a total of the average Ni concentration, the average W concentration, and the average Fe concentration) was measured, and shown in the column "W proportion in the low W concentration layer" in Table 2-2. From the measured W proportion in the high W concentration layer and W proportion in the low W concentration layer, the W proportion in the low W concentration layer with respect to the W proportion in the high W concentration layer was obtained and shown in the column "W proportion in the low W concentration layer/W proportion in the high W concentration layer" in Table 2-2. In addition, the LIB electrolyte solution resistances of various surface-treated steel sheets obtained by the above procedure and SUS sheets were evaluated.

A method of analyzing the thickness of Ni plating before Ni-W alloy plating, a method of analyzing the W concentration and the thickness of the Ni-W alloy plating layer of the plated steel sheet before annealing, and a method of measuring the W proportion in the high W concentration layer and the W proportion in the low W concentration layer of the surface-treated steel sheet after annealing were as described above. The results are shown in Table 2-2. PHI 5600 (model number, commercially available from ULVAC-PHI, Inc.) was used as the XPS device. For XRF measurement, ZSX Primus II (model number, commercially available from Rigaku Corporation) was used. In addition, the method of measuring the Ni coating weight contained in the plating layer was as described above. The results are shown in the column "alloy plating layer" in Table 2-2. In addition, the LIB electrolyte solution resistances of the surface-treated steel sheets and SUS sheets were evaluated using a processing simulation test (drawbead test) and an anode current test in combination. The results are shown in the column "evaluation result" in Table 2-2.

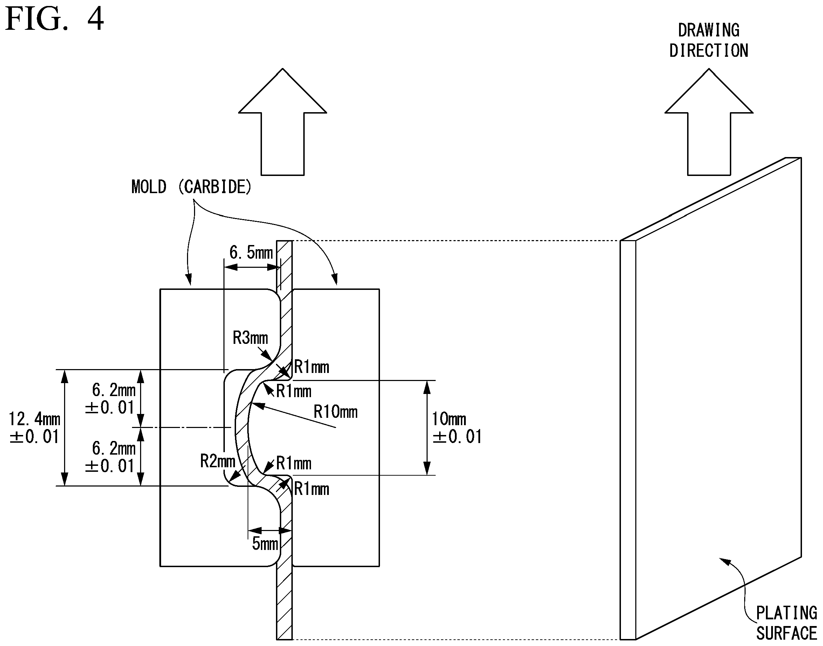

The drawbead test was performed by inserting the surface-treated steel sheet and the SUS sheet inserted between molds shown in FIG. 4, then performing press-processing by pushing the molds, and additionally drawing the surface-treated steel sheet and the SUS sheet while molds were pushed from the molds. The drawbead test was a test simulating press-processing of the surface-treated steel sheet and the SUS sheet performed in order to produce the battery can. When electrochemical properties of the surface-treated steel sheet and the SUS sheet after the drawbead test was performed were evaluated, it was possible to estimate electrochemical performance of the battery can produced using the surface-treated steel sheet and the SUS sheet.

The anode current test was performed by performing microelectrochemical measurement on the surfaces of the surface-treated steel sheet and the SUS sheet after the drawbead test. The anode current test was performed using potentiostat Model 1287A (commercially available from Solratron Analytical). Evaluation conditions are as follows.
- shape of evaluation region: circle with a diameter of 500 µm
- measurement location: 5 locations (the average of measurement results at 5 locations was used as the final evaluation result)
- potential control: after a measurement system was constructed, an open circuit voltage (OCV) was maintained for 5 minutes and then increased to 4.5 V. The sweep speed in vs. Li LSV (Linear Sweep Voltammetry) during the rise was set to 20 mV/s.
- measurement environment: an atmospheric temperature of 23°C, a dew point of - 80°C or lower, and an oxygen concentration of 0.7 ppm or less
- electrolyte solution: 1 mol/L LiPF₆ EC (ethylene carbonate):EMC (ethyl methyl carbonate) (1:3v/v%)+VC (vinylene carbonate) 2 wt%
- pass/fail criteria: pass if the anode current value at 3.8 V was 0.025 µA or less

**[Table 1-1]**

| Composition of bath 1 | | |
|---|---|---|
| Name of chemical agent | Molar concentration mol/L | g/L |
| NiSO₄·6H₂O | 1.29 | 340 |
| NiCl₂·6H₂O | 0.29 | 70 |
| Boric acid | 0.73 | 45 |
| H₂SO₄ | 0.005 | 0.5 |

**[Table 1-2]**

| Composition of bath 2 | | |
|---|---|---|
| Name of chemical agent | Molar concentration mol/L | g/L |
| Na₂WO₄·2H₂O | 0.20 | 65.97 |
| NiSO₄·6H₂O | 0.20 | 52.57 |
| Diammonium hydrogen citrate | 0.45 | 101.78 |
| Sodium formate | 0.20 | 13.60 |

**[Table 2-1]**

| Level | Preparation procedure | Heating rate | Ni plating | Ni-W alloy plating | | Total Ni coating weight |
|---|---|---|---|---|---|---|
| | | | Thickness | W concentration | Thickness | |
| | | (°C/s) | (µm) | (mass%) | (µm) | (g/m²) |
| 1 | Ni-W →anneal | 7.0 | - | 41 | 1.0 | 7.8 |
| 2 | Ni→Ni-W→anneal | 7.0 | 1.0 | 40 | 0.50 | 13.3 |
| 3 | Ni→Ni-W→anneal | 7.0 | 1.0 | 40 | 0.30 | 12.0 |
| 4 | Ni→Ni-W→anneal | 7.0 | 1.0 | 40 | 0.10 | 10.7 |
| 5 | Ni→Ni-W→anneal | 7.0 | 1.0 | 38 | 0.030 | 10.1 |
| 6 | Ni→Ni-W→anneal | 7.0 | 1.0 | 22 | 0.010 | 10.0 |
| 7 | Ni→Ni-W→anneal | 7.0 | 1.0 | 22 | 0.005 | 10.0 |
| 8 | Ni→Ni-W→anneal | 7.0 | 0.5 | 38 | 0.030 | 5.2 |
| 9 | Ni→Ni-W→anneal | 7.0 | 2.1 | 38 | 0.030 | 20.0 |
| 10 | Ni→Ni-W→anneal | 7.0 | 2.9 | 38 | 0.030 | 28.1 |
| 11 | Ni→Ni-W→anneal | 7.0 | 0.2 | 40 | 0.10 | 2.2 |
| 12 | Ni→anneal | 7.0 | 0.9 | - | - | 8.9 |
| 13 | - | - | | - | - | - |
| 14 | Ni→Ni-W→anneal | 3.0 | 1.0 | 40 | 0.10 | 10.7 |
| 15 | Ni→Ni-W→anneal | 12.0 | 1.0 | 40 | 0.10 | 10.7 |

**[Table 2-2]**

| Level | W proportion in high W concentration layer | W proportion in low W concentration layer | W proportion in low W concentration layer/w proportion in high W concentration layer | Evaluation result | Note |
|---|---|---|---|---|---|
| | (atomic%) | (atomic%) | | | |
| 1 | 29.6 | 33.0 | 1.11 | fail | Comparative Example |
| 2 | 25.6 | 26.8 | 1.05 | fail | Comparative Example |
| 3 | 18.5 | 12.8 | 0.69 | pass | Invention Example |
| 4 | 16.8 | 10.5 | 0.63 | pass | Invention Example |
| 5 | 6.9 | 1.9 | 0.28 | pass | Invention Example |
| 6 | 2.3 | 0.5 | 0.22 | pass | Invention Example |
| 7 | 1.4 | 0.3 | 0.21 | fail | Comparative Example |
| 8 | 6.8 | 1.9 | 0.28 | pass | Invention Example |
| 9 | 6.7 | 1.9 | 0.28 | pass | Invention Example |
| 10 | 6.9 | 1.8 | 0.26 | pass | Invention Example |
| 11 | 15.9 | 10.3 | 0.65 | pass | Invention Example |
| 12 | - | - | - | fail | Comparative Example |
| 13 | - | - | - | fail | Comparative Example |
| 14 | 13.2 | 11.8 | 0.89 | fail | Comparative Example |
| 15 | 20.7 | 6.6 | 0.32 | fail | Comparative Example |

Level 1 was a surface-treated steel sheet obtained by forming only a Ni-W alloy plating layer on the surface of a base steel sheet and then performing annealing. Levels 2 to 11, 14, and 15 were surface-treated steel sheets obtained by forming a Ni plating layer on the surface of a base steel sheet, additionally forming a thin Ni-W alloy plating layer thereon and then performing annealing. Level 12 was a surface-treated steel sheet obtained by forming only a Ni plating layer on the surface of a base steel sheet and then performing annealing. Level 13 was a SUS sheet having no plating layer.

Levels 3 to 6, and Levels 8 to 11 were invention examples including a high W concentration layer with a W proportion of 2.0 to 20.0 atomic% and a low W concentration layer with a W proportion 0.7 times or less that of the high W concentration layer. The LIB electrolyte solution resistances thereof were better than that of Level 1 as a general Ni-W alloy plating steel sheet, Level 12 as a general Ni-plated steel sheet, and Level 13 as a general SUS sheet. That is, according to the present invention, it is possible to provide a surface-treated steel sheet having better LIB electrolyte solution resistance than conventional SUS sheets, Ni-plated steel sheets and the like, and a method of producing the same.

Here, like Levels 3 to 6, and Levels 8 to 10, Level 2 and Level 7 were obtained by forming a Ni plating layer and a Ni-W alloy plating layer and then performing annealing. However, in Level 2, the W proportion in the high W concentration layer was excessive and a large amount of W was contained in the low W concentration layer so that the LIB electrolyte solution resistance was unsatisfactory. This was probably because the Ni-W alloy plating layer in Level 2 was too thick. In Level 7, since the W proportion in the high W concentration layer was too low, the LIB electrolyte solution resistance was unsatisfactory. This was probably because the Ni-W alloy plating layer in Level 7 was too thin.

In Level 14, since the heating rate in a temperature range of 600°C to 700°C was too slow, the LIB electrolyte solution resistance was unsatisfactory. This was thought to be because diffusion of Ni and W proceeded too much, the W concentration in the high W concentration layer became low, and the W concentration in the low W concentration layer became high, and thus the W proportion in the low W concentration layer was more than 0.7 times that of the high W concentration layer.

In Level 15, since the heating rate in a temperature range of 600°C to 700°C was too high, the LIB electrolyte solution resistance was unsatisfactory. This was thought to be because diffusion of Ni and W proceeded insufficient, and the W proportion in the high W concentration layer became high.

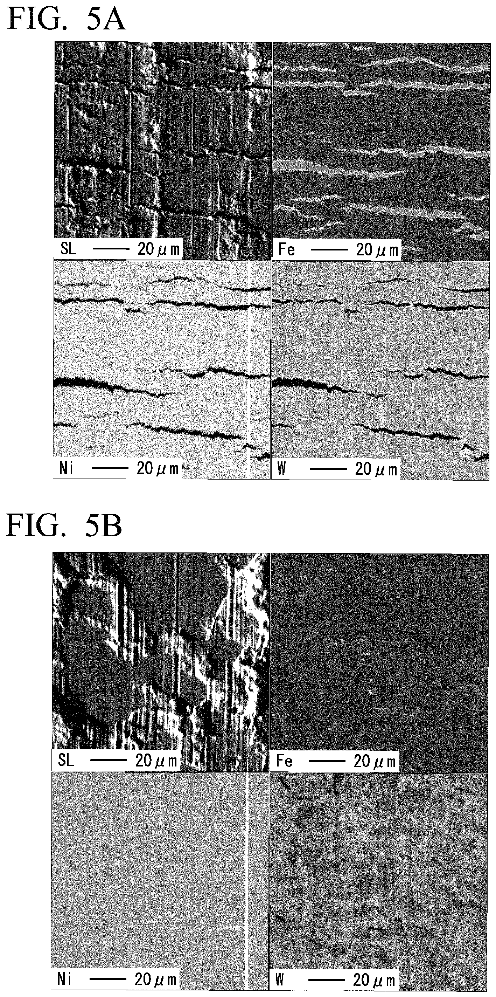

FIG. 5A shows the surface analysis result of the surface-treated steel sheet of Level 1 after the drawbead test, and FIG. 5B shows the surface analysis result of the surface-treated steel sheet of Level 3 after the drawbead test. In FIG. 5A and FIG. 5B, the upper left image was the SEM image of the surface-treated steel sheet, the upper right image shows the surface analysis result of the Fe concentration at the location in which an SEM image was taken, the lower left image shows the surface analysis result of the Ni concentration at the location in which an SEM image was taken, and the lower right image shows the surface analysis result of the W concentration at the location in which an SEM image was taken.

On the surface of the surface-treated steel sheet of Level 1, there were many locations in which Ni and W were deficient. At the deficient locations, the Fe concentration was high. In the surface-treated steel sheet of Level 1, it was thought that many cracks occurred in the hard Ni-W alloy plating layer and the base steel sheet was exposed. On the other hand, on the surface of the surface-treated steel sheet of Level 4, no Ni- and W-deficient location was observed. It was presumed that, when exposure of the base steel sheet was reduced, the LIB electrolyte solution resistance of the surface-treated steel sheet of Level 4 was significantly improved compared to Level 1.

### [Brief Description of the Reference Symbols]

1 Surface-treated steel sheet
11 Base steel sheet
12 Plating layer
121 High W concentration layer
122 Low W concentration layer
C1 Average W concentration in high W concentration layer
C2 Average W concentration in low W concentration layer
S1 Ni plating step
S2 Ni-W alloy plating step
S3 Annealing step

## Claims

1. A surface-treated steel sheet, comprising:
a base steel sheet; and
a plating layer containing Ni and W which is provided on a surface of the base steel sheet,
wherein, in a region from an outmost surface of the plating layer to a depth of 150 nm, a proportion of an average W concentration with respect to a total of an average Ni concentration, the average W concentration, and an average Fe concentration, at unit atomic%, which is determined in accordance with the description, is 2.0 to 20.0 atomic%, and
in a region of the plating layer from a depth of 150 nm to a depth of 300 nm, a proportion of an average W concentration with respect to a total of an average Ni concentration, the average W concentration, and an average Fe concentration, at unit atomic%, which is determined in accordance with the description, is 0.7 times or less than the proportion in the region from the outmost surface of the plating layer to the depth of 150 nm.

2. The surface-treated steel sheet according to claim 1,
wherein a Ni coating weight contained in the plating layer is 2.6 to 35.6 g/m².

3. The surface-treated steel sheet according to claim 1 or 2,
wherein the base steel sheet is low-carbon aluminum killed-steel or IF steel.

4. The surface-treated steel sheet according to any one of claims 1 to 3,
wherein, in the region from the outmost surface of the plating layer to the depth of 150 nm, the proportion of the average W concentration with respect to the total of the average Ni concentration, the average W concentration, and the average Fe concentration, at unit atomic% is 6.0 atomic% or more.

## Patentansprüche

1. Ein oberflächenbehandeltes Stahlblech, umfassend:
ein Basisstahlblech; und
eine Ni und W enthaltende Plattierungsschicht, die auf einer Oberfläche des Basisstahlblechs bereitgestellt ist,
wobei in einem Bereich von einer äußersten Oberfläche der Plattierungsschicht bis zu einer Tiefe von 150 nm ein Anteil einer mittleren W-Konzentration, bezogen auf eine Gesamtheit einer mittleren Ni-Konzentration, der mittleren W-Konzentration und einer mittleren Fe-Konzentration, in der Einheit Atom-%, die gemäß der Beschreibung bestimmt werden, 2,0 bis 20,0 Atom-% beträgt, und
in einem Bereich der Plattierungsschicht von einer Tiefe von 150 nm bis zu einer Tiefe von 300 nm ein Anteil einer mittleren W-Konzentration, bezogen auf eine Gesamtheit einer mittleren Ni-Konzentration, der mittleren W-Konzentration und einer mittleren Fe-Konzentration, in der Einheit Atom-%, die gemäß der Beschreibung bestimmt werden, das 0,7-Fache oder weniger als der Anteil in dem Bereich von der äußersten Oberfläche der Plattierungsschicht bis zu einer Tiefe von 150 nm beträgt.

2. Das oberflächenbehandelte Stahlblech nach Anspruch 1,
wobei ein in der Plattierungsschicht enthaltenes Ni-Beschichtungsgewicht 2,6 bis 35,6 g/m² beträgt.

3. Das oberflächenbehandelte Stahlblech nach Anspruch 1 oder 2,
wobei das Basisstahlblech kohlenstoffarmer, aluminiumberuhigter Stahl oder IF-Stahl ist.

4. Das oberflächenbehandelte Stahlblech nach einem der Ansprüche 1 bis 3,
wobei in dem Bereich von der äußersten Oberfläche der Plattierungsschicht bis zu einer Tiefe von 150 nm der Anteil der mittleren W-Konzentration, bezogen auf die Gesamtheit der mittleren Ni-Konzentration, der mittleren W-Konzentration und der mittleren Fe-Konzentration, in der Einheit Atom-%, 6,0 Atom-% oder mehr beträgt.

## Revendications

1. Tôle d'acier traitée en surface, comprenant :
une tôle d'acier de base ; et
une couche de placage contenant Ni et W qui est disposée sur une surface de la tôle d'acier de base,
dans laquelle, dans une région allant de la surface la plus extérieure de la couche de placage jusqu'à une profondeur de 150 nm, la proportion de la concentration moyenne de W par rapport au total de la concentration moyenne de Ni, de la concentration moyenne de W, et de la concentration moyenne de Fe, en pourcentages atomiques qui sont déterminés conformément à la description, est de 2,0 à 20,0 % atomiques, et
dans une région de la couche de placage allant d'une profondeur de 150 nm jusqu'à une profondeur de 300 nm, la proportion de la concentration moyenne de W par rapport au total de la concentration moyenne de Ni, de la concentration moyenne de W, et de la concentration moyenne de Fe, en pourcentages atomiques qui sont déterminés conformément à la description, est de 0,7 fois ou moins la proportion dans la région allant de la surface la plus extérieure de la couche de placage jusqu'à la profondeur de 150 nm.

2. Tôle d'acier traitée en surface selon la revendication 1, dans laquelle le poids du revêtement de Ni contenu dans la couche de placage est de 2,6 à 35,6 g/m².

3. Tôle d'acier traitée en surface selon la revendication 1 ou 2, dans laquelle la tôle d'acier de base est en acier calmé à l'aluminium à faible teneur en carbone ou en acier IF.

4. Tôle d'acier traitée en surface selon l'une quelconque des revendications 1 à 3, dans laquelle, dans la région allant de la surface la plus extérieure de la couche de placage jusqu'à une profondeur de 150 nm, la proportion de la concentration moyenne de W par rapport au total de la concentration moyenne de Ni, de la concentration moyenne de W, et de la concentration moyenne de Fe, en pourcentages atomiques est de 6,0 % atomiques ou plus.
